# FASCICULE DE BREVET EUROPEEN

(11) **EP 4 056 885 B1**
(45) Date de publication et mention de la délivrance du brevet: **21.06.2023**
(21) Numéro de dépôt: 22160946.4
(22) Date de dépôt: 09.03.2022
(51) Int. Cl.: F17C 1/00

(54) **DISPOSITIF POUR LE STOCKAGE D'UN GAZ SOUS PRESSION, NOTAMMENT DE L HYDROGÈNE**
VORRICHTUNG FÜR DIE SPEICHERUNG EINES UNTER DRUCK STEHENDEN GASES, INSBESONDERE VON WASSERSTOFF
DEVICE FOR STORING A PRESSURISED GAS, IN PARTICULAR HYDROGEN

(30) Priorité: 09.03.2021 FR 2102314
(43) Date de publication de la demande: 14.09.2022
(73) Titulaire: Faurecia Systèmes d'Echappement, 92000 Nanterre (FR)
(72) Inventeur: MORET, Marc, 44240 La Chapelle sur Erdre (FR); DE BRUX, Antoine, 44350 Guérande (FR)
(74) Mandataire: Lavoix

(56) Documents cités:
- DE-A1- 2 931 947
- DE-A1- 19 749 950
- DE-A1-102019 107 984
- US-A- 6 090 465
- US-A1- 2004 226 607
- US-B1- 6 668 561

## Description

### Domaine technique

L'invention concerne un réservoir, transportable, pour le stockage d'un gaz sous pression. L'invention est plus particulièrement, mais non exclusivement, dédiée au stockage de dihydrogène sous pression, dans le domaine des transports où l'hydrogène est utilisé comme combustible pour produire l'énergie utilisée en vue de déplacer un véhicule, dans les domaines routiers, aérien, nautique ou ferroviaire.

L'invention est cependant également adaptée à un stockage connexe à un moyen de production du dihydrogène, qu'il soit statique ou embarqué.

### Technique antérieure

Le stockage d'un gaz sous pression dans un réservoir transportable est généralement réalisé dans un réservoir cylindrique ou sphérique, en métal ou en matériau composite.

Du fait de sa faible masse volumique, l'hydrogène gazeux est stocké à des pressions relativement élevées, couramment comprises entre 200 bars et 700 bars (2.10⁷ à 7.10⁷ Pa).

Ce type de réservoir de l'art antérieur, par sa forme et son volume, est difficile à intégrer dans un véhicule, cette intégration se faisant généralement aux dépens de l'habitabilité dudit véhicule.

Contenant un gaz sous pression, le réservoir doit être protégé des chocs susceptibles d'être subis par le véhicule, ce qui rend encore plus complexe son intégration. De plus, la résistance mécanique dudit réservoir, indispensable pour contenir le gaz sous haute pression, pose des difficultés vis-à-vis du comportement dudit véhicule en cas de choc : ledit réservoir ne pouvant pas participer à l'absorption de l'énergie du choc par la déformation de la structure du véhicule.

Ainsi, dans un véhicule, notamment automobile, utilisant de l'hydrogène comme carburant, la réserve de dihydrogène est le plus souvent stockée dans plusieurs réservoirs répartis en plusieurs emplacements du véhicule, ce qui rend plus complexe la gestion de cette réserve.

La pression de 700 bars est considérée comme une limite notamment pour des raisons de sécurité mais aussi d'encombrement et de poids des réservoirs traditionnels cylindriques ou sphériques.

Selon un autre mode de réalisation de l'art antérieur, l'hydrogène est stocké à basse pression sous forme d'hydrure métallique. Cette forme de stockage est souvent considérée comme l'une des plus sûre selon l'art antérieur, car elle permet de stocker d'hydrogène sous une pression faible, de l'ordre de 10 bars (10⁶ Pa).

Ce principe de stockage repose sur une absorption réversible, dans certaines conditions thermodynamiques, de l'hydrogène par certains métaux, par exemple le magnésium (Mg), ou certains composés.

De tels réservoirs sont remplis de ces métaux ou composés sous une forme pulvérulente. Le réservoir est chargé en y introduisant du dihydrogène (H₂) gazeux, lequel gaz est absorbé par les particules métalliques dans une réaction exothermique sous une pression d'équilibre.

La décharge, endothermique, est réalisée en mettant le réservoir en communication avec une pression plus faible que la pression d'équilibre et/ou en chauffant ledit réservoir.

Un exemple de stockage de l'hydrogène sous forme d'hydrure est décrit dans le document WO2007011476.

Ce type de stockage permet un nombre relativement important de cycles de charge / décharge, mais les capacités de stockage d'un tel réservoir se dégradent dans le temps. En effet, les particules d'hydrure se dilatent lors de la charge, par l'absorption d'hydrogène, et se rétractent lors de la décharge.

Ces cycles de contraction-expansion entraînent des tassements de la poudre dans le réservoir, particulièrement si ces effets se combinent aux effets de la gravité. Ces tassements nuisent à la performance de stockage du réservoir et peuvent même entraîner des problèmes de sécurité, les particules ainsi tassées produisant alors de contraintes importantes lors de leur dilatation au cours de la charge.

Le document US 8 651 268 est un perfectionnement de ce mode de réalisation de l'art antérieur et décrit un réservoir de forme sensiblement prismatique, apte à contenir un gaz, notamment du dihydrogène, comprenant une enveloppe externe et un matériau de remplissage structurel interne, lié à ladite enveloppe externe, notamment par collage.

Le matériau de remplissage est par exemple constitué d'un liant comprenant des particules d'hydrures aptes à absorber le gaz.

Étant lié à l'enveloppe externe, le matériau de remplissage participe à la résistance mécanique du réservoir, toutefois, cette amélioration reste limitée à la résistance de l'interface entre le matériau de remplissage et l'enveloppe externe. De plus, les applications de ce dispositif de l'art antérieur sont adaptées pour la réalisation de petits réservoirs, d'un volume inférieur à 500 cm³, voire inférieur à 5 cm³ et il n'est, de ce fait, pas adapté au transport d'hydrogène comme source d'énergie pour la plupart des véhicules.

Cette solution de stockage en hydrure de magnésium pose également un problème de masse, il faut en effet 23,6 kg d'hydrure de magnésium (MgH₂) pour stocker 2 kg d'hydrogène.

Finalement, dans le cadre d'une utilisation de type mobilité, où il est nécessaire de disposer ponctuellement d'une puissance importante, la libération de l'hydrogène des hydrures est trop lente par simple différence de pression et nécessite de chauffer le réservoir à des températures de l'ordre de 300 °C.

Le document US 6 090 465 décrit un réservoir apte à contenir un fluide sous pression comprenant une enveloppe délimitant une cavité dans laquelle est contenu le fluide, et comprenant des fibres de renfort s'étendant dans ladite cavité entre deux faces de l'enveloppe.

### Résumé de l'invention

L'invention vise à remédier aux inconvénients de l'art antérieur et concerne à cette fin un réservoir, de forme générale prismatique, comprenant une enveloppe composite à renforts fibreux et matrice continus s'étendant sur toutes les faces du prisme et délimitant une cavité interne comprenant une pluralité d'alvéoles ouvertes, lequel réservoir comprend des renforts fibreux continus, dits renforts transversaux, s'étendant dans l'enveloppe composite et liés à celle-ci et qui, de plus, s'étendent à travers la cavité interne entre deux faces du réservoir, comprenant une doublure étanche entre l'enveloppe externe et la cavité interne et des espaceurs s'étendant entre deux faces de ladite cavité..

Ainsi, le réservoir objet de l'invention, par sa forme prismatique, est plus facile à intégrer dans un véhicule, notamment dans un plancher ou une paroi, les renforts fibreux transversaux s'étendant entre les faces tout en faisant partie de celles-ci, participent à la tenue mécanique du réservoir, et permettent à celui-ci, d'une part, de résister à des pressions élevées, notamment compatibles avec les pressions de stockage du dihydrogène et d'autre part, d'accroître la rigidité transversale du réservoir, notamment en flexion, pour son intégration dans une structure.

L'enveloppe externe est réalisable par des technologies de fabrications classiques dans le domaine des matériaux composites.

L'invention est avantageusement mise en oeuvre selon les modes de réalisation et les variantes exposés ci-après, lesquels sont à considérer individuellement ou selon toute combinaison techniquement opérante.

Selon un mode de réalisation, les espaceurs sont creux et les renforts transversaux s'étendent à l'intérieur desdits espaceurs creux. Ce mode de réalisation est plus adapté à une fabrication en grande série.

Selon un autre mode de réalisation, les espaceurs sont constitués d'un non-tissé tridimensionnel. Ce mode de réalisation est plus économique notamment pour des fabrications l'unité ou sur mesure.

Avantageusement, le réservoir objet de l'invention comprend une bride venant de matière avec l'enveloppe composite pour sa fixation. Ainsi, ledit réservoir est plus facile à intégrer dans une structure.

Avantageusement, le réservoir objet de l'invention comprend un raccord comportant une partie s'étendant à travers l'enveloppe composite jusque dans la cavité interne.

Selon une variante de réalisation, la partie du raccord s'étendant jusque de la cavité interne est filetée.

Selon une autre variante de réalisation, la partie du raccord s'étendant jusque de la cavité interne est une aiguille conique.

Selon encore une autre variante, la partie du raccord s'étendant jusque de la cavité interne est une aiguille annelée.

Ces différentes variantes de réalisation permettent au raccord de pénétrer dans la cavité interne du réservoir sans endommager les fibres.

Avantageusement, le raccord est maintenu par des bandes de maintien entourant le réservoir. Lesdites bandes de maintien participent également à la tenue à la pression du réservoir.

Le réservoir objet de l'invention est avantageusement utilisé pour contenir de l'hydrogène sous une pression comprise entre 200 bars et 1000 bars. En effet, la structure du réservoir objet de l'invention dans lequel la cavité de stockage alvéolée participe à la résistance mécanique permet une utilisation, en toute sécurité, à des pressions plus élevées que celles de l'art antérieur.

À cette fin, ledit réservoir est avantageusement intégré à une structure, notamment à la structure d'un plancher dans un véhicule, ou dans un aéronef.

### Brève description des dessins

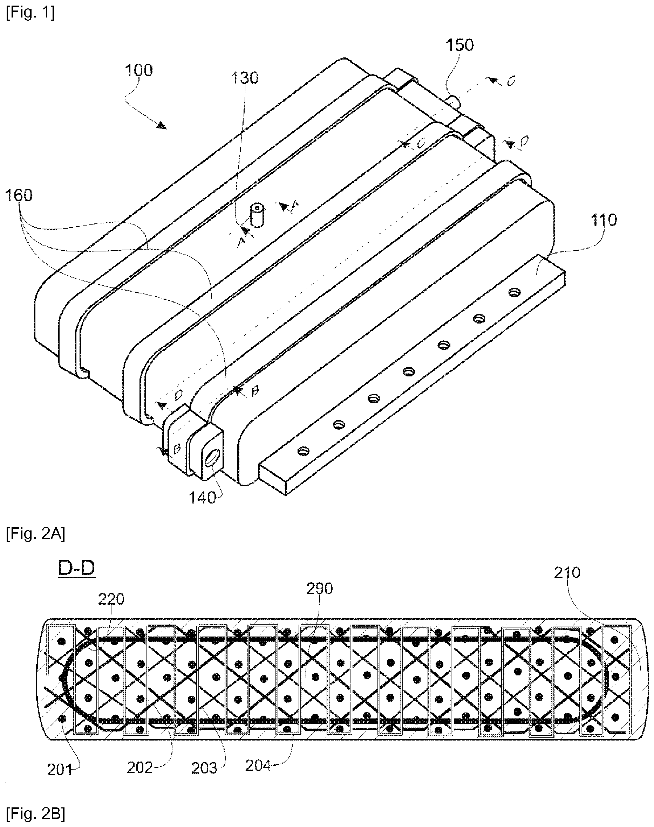

L'invention est exposée ci-après selon ses modes de réalisation préférés, nullement limitatifs, en référence aux figures 1 à 8 dans lesquelles :
**Fig.1**
   [Fig.1] représente en perspective vue de dessus un exemple de réalisation du réservoir objet de l'invention ;
**Fig.2A**
   [Fig.2A] montre schématiquement, selon une vue en coupe DD définie figure 1, la structure interne du réservoir, selon un mode de réalisation ;
**Fig.2B**
   [Fig.2B] montre schématiquement, selon une vue en coupe DD définie figure 1, la structure interne du réservoir selon une variante du mode de réalisation de la figure 2A, comprenant des espaceurs ;
**Fig.3**

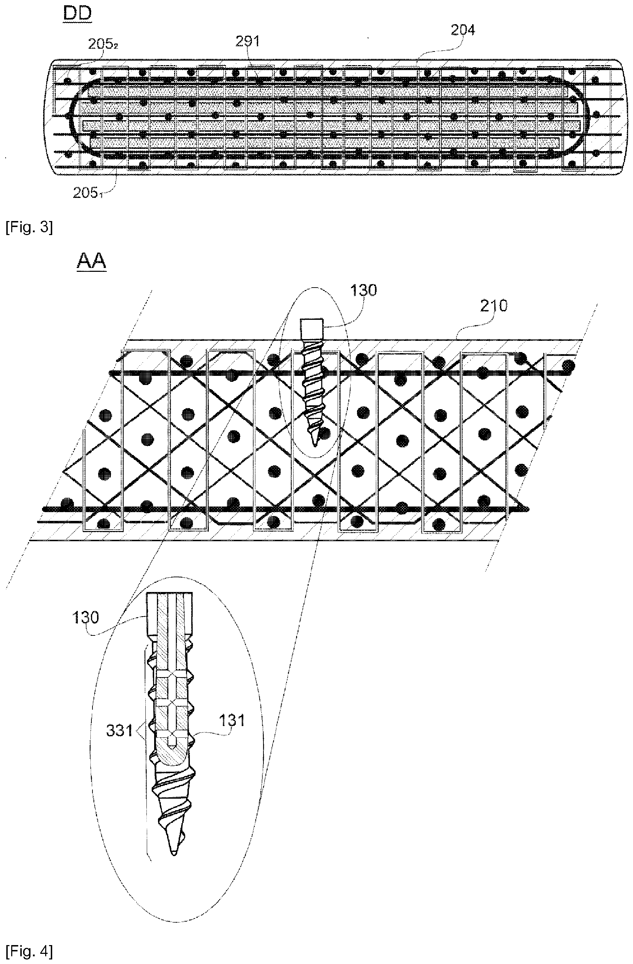

   [Fig.3] est une vue en coupe partielle selon AA définie figure 1, d'un exemple de réalisation d'un raccord, et comprend une vue de détail en écorché dudit raccord ;
**Fig.4**
   [Fig.4] montre selon une vue en coupe partielle BB définie figure 1, un autre exemple de réalisation d'un raccord ;
**Fig.5**

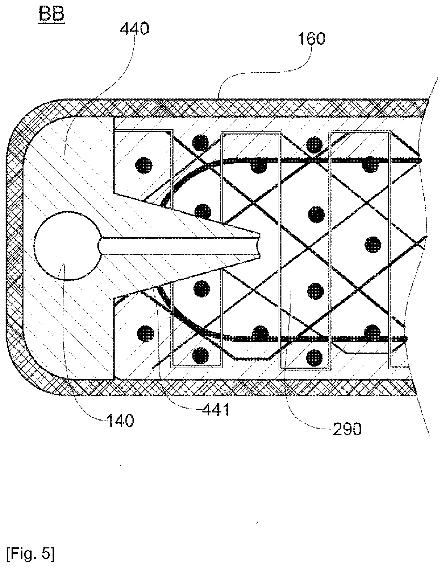

   [Fig.5] représente un troisième mode de réalisation d'un raccord pour le réservoir objet de l'invention, selon une vue en coupe partielle CC définie figure 1 ;
**Fig.6**

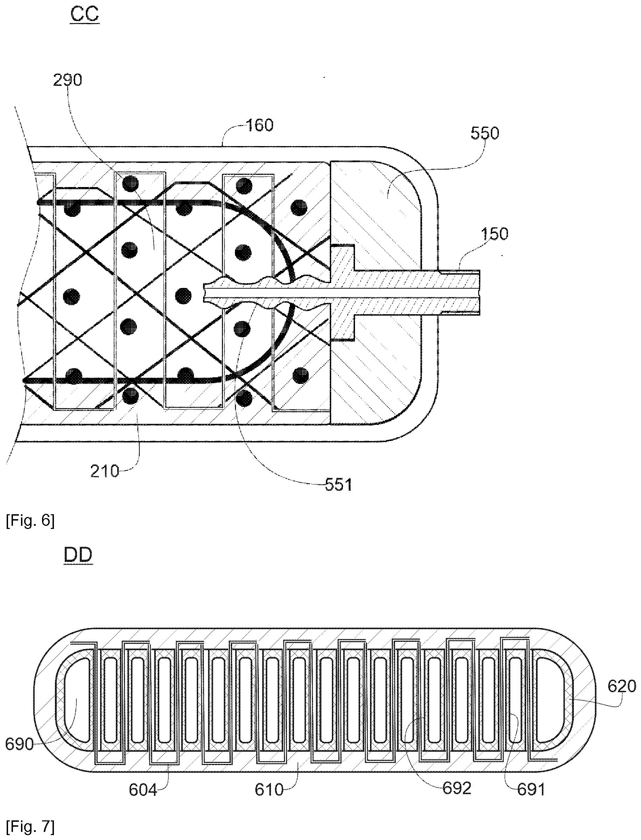

   [Fig.6] montre selon une vue en coupe DD définie figure 1, une variante de réalisation de la structure du réservoir selon l'invention ;
**Fig.7**
   [Fig.7] montre selon une vue en perspective un exemple d'intégration d'un réservoir objet de l'invention aux planchers d'un aéronef ;
**Fig.8**

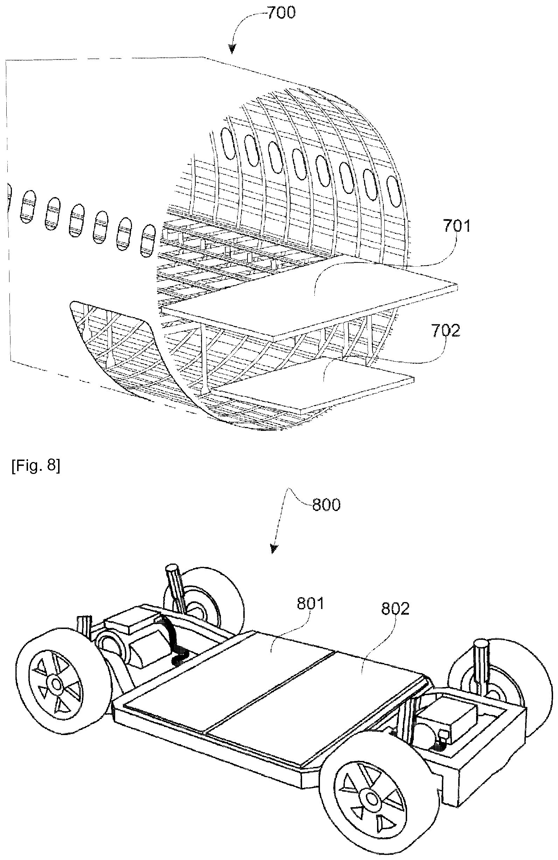

   [Fig.8] représente selon une vue en perspective, un exemple d'intégration d'un réservoir objet de l'invention à un châssis d'automobile.

### Description des modes de réalisation

Figure 1, selon un exemple de réalisation le réservoir (100) objet de l'invention est de forme générale prismatique, ici à base rectangulaire, et comprend optionnellement une bride (110) permettant sa fixation par tout moyen, notamment par boulonnage, à toute structure, notamment celle d'un véhicule. Ladite bride est avantageusement intégrée à l'enveloppe composite lors de la fabrication du réservoir et vient de matière avec ladite enveloppe.

Le réservoir (100) comprend un raccord (130, 140, 150) pour permettre le remplissage et le tirage du gaz qu'il contient.

La figure 1 montre 3 exemples de réalisation de raccords sur le même réservoir, l'homme du métier comprend qu'un seul raccord selon l'un quelconque de ces modes de réalisation est nécessaire, sans pour autant exclure la possibilité d'une pluralité de raccords sur le même réservoir.

Figure 2A, selon un exemple de réalisation le réservoir est constitué d'un matériau composite à renfort fibreux continu.

Selon des exemples de réalisation non limitatifs, les fibres (201, 202, 203, 204) sont des fibres de carbone, de verre, d'aramide uniquement ou en combinaison, de sorte à conférer audit réservoir les propriétés de résistance mécanique, à la pression, au choc et au poinçonnement, selon l'application visée.

Selon cet exemple de réalisation, le réseau fibreux se présente sous la forme de tissus tridimensionnels de type entrelacé étirables, couramment désigné sous le terme anglo-saxon « *interlock* », comprenant des fibres de trame reliant des faces latérales du prisme (201), et des fibres de chaîne tissés de sorte que leur orientation en section varie entre 0° et 45° (202, 203) assurant respectivement la liaison entre les faces latérales ainsi qu'entre les faces supérieure et inférieure du prisme. Il comprend en outre des renforts transversaux (204) traversant le réseau fibreux.

Lesdits renforts transversaux (204) s'étendent à la fois entre deux faces non contiguës, sensiblement perpendiculairement aux dites deux faces, mais aussi dans l'épaisseur desdites faces, sensiblement parallèlement à ces faces.

Le réservoir comprend une enveloppe externe (210) dans laquelle les fibres sont emprisonnées dans une matrice polymère continue, de nature thermoplastique ou thermodurcissable, constituant ainsi une enveloppe composite à renfort fibreux continu. Cette enveloppe (210) s'étend sur les 6 faces du prisme et comporte, sur sa face interne, une doublure étanche (220), également désignée par le terme « *liner* ».

Cette doublure étanche (220) délimite une cavité interne (290) dans laquelle le gaz, notamment du dihydrogène, est contenu sous pression.

Des fibres (201, 202, 203, 204) contenues dans l'enveloppe externe sur une des faces du prisme, où elles sont emprisonnées dans la matrice, s'étendent jusqu'à une autre face de l'enveloppe où elles sont également emprisonnées dans la matrice polymère, en traversant la cavité interne (290) du réservoir.

Le taux de fibres dans la cavité (290) est nettement plus faible que dans l'enveloppe externe, et les fibres y sont imprégnées d'un polymère sans constituer une matrice continue, de sorte que la cavité interne est un volume alvéolé, comprenant une pluralité d'alvéoles ouvertes délimitées par lesdites fibres.

Le gaz sous pression est contenu dans la cavité interne, la pression met sous tension les fibres contenues dans cette cavité, de sorte que ces fibres constituent des renforts transversaux et participent à la résistance mécanique du réservoir

Avantageusement la densité de fibres est accrue dans l'enveloppe (210) vers la surface externe de sorte à améliorer la résistance à la pression.

Ainsi, selon un exemple de réalisation, le taux de fibres est compris entre 40 % et 65 % dans l'enveloppe externe et entre 4 % et 10 % au centre de la cavité interne (290).

Les fibres comprises dans l'enveloppe extérieure et qui s'étendent à travers la cavité entre deux faces, participent à la résistance mécanique du réservoir tant vis-à-vis de la pression interne que des sollicitations externes, mais ménagent un volume alvéolé dans la cavité, apte à contenir un gaz sous pression.

Les valeurs de taux de fibres indiquées ci-dessus sont indicatives d'un mode de réalisation préféré relatif à un compromis entre résistance mécanique et contenance du réservoir, mais l'homme du métier comprend que le taux de fibres dans la cavité est, selon l'application visée, avantageusement augmenté pour accroître la résistance mécanique au détriment de la contenance ou vice-versa.

Figure 2B, selon une variante de réalisation, le réseau fibreux comprend, dans la cavité interne, des espaceurs (291) afin de générer un volume de stockage. Dans cette variante, le réseau fibré est constitué d'un empilement de tissus de type sergé ou taffetas (205₁, 205₂) selon des directions croisées, reliant les faces latérales du réservoir, et séparés localement par lesdits espaceurs.

Selon des variantes de réalisation, les espaceurs (291) sont, dans une désignation générale, constitués d'un non-tissé tridimensionnel ce qui englobe différents types de mousse à cellules ouvertes, des nattes perméables et d'autres médiums de structure discontinue ou alvéolée.

De la même manière, le réseau fibreux est renforcé par des renforts transversaux (204) s'étendant entre des faces opposées du réservoir.

Figure 3, selon un exemple de réalisation, le raccord (130) comprend une partie externe pour y raccorder un conduit et une partie interne (331) s'étendant à travers l'enveloppe composite (210) du réservoir jusque dans la cavité interne (290). Le raccord (130) est par exemple réalisé dans un matériau métallique, qui, selon l'application visée, est choisi résistant au phénomène de fragilisation par l'hydrogène, par exemple un alliage de cuivre ou d'aluminium.

Selon cet exemple de réalisation, la partie (331) du raccord s'étendant à l'intérieur du réservoir est filetée. Ce filetage (131) confère au raccord une résistance à l'arrachement sans endommager les fibres.

De manière préférentielle, ledit raccord est intégré à la préforme fibreuse avant l'imprégnation de l'enveloppe extérieure (210) par le polymère constituant la matrice.

Figure 4, selon un autre exemple de réalisation le raccord (140) est intégré à un bloc raccord (440) réalisé dans un matériau métallique, qui, selon l'application visée, est choisi résistant au phénomène de fragilisation par l'hydrogène, par exemple un alliage de cuivre ou d'aluminium.

La figure 4 et la figure 1 représentent un raccord (140) de type femelle, mais l'homme du métier comprend qu'un raccord de type mâle est réalisable selon les mêmes principes.

Le bloc raccord (440) comprend une aiguille (441), de préférence conique, apte à pénétrer dans l'empilement fibreux jusque dans la cavité (290) contenant le gaz, sans dégrader les fibres.

Ledit bloc raccord (440) est préférentiellement intégré au réservoir au stade de la préforme avant l'imprégnation de l'enveloppe externe (210) par le polymère constituant sa matrice, de sorte que les fibres ne sont pas dégradées par l'installation dudit bloc raccord et que l'étanchéité est assurée.

Une ou plusieurs bandes de maintien (160), métalliques, ou de préférence composites obtenues par enroulement filamentaire, s'étendent autour du réservoir et assurent la tenue du bloc raccord (440) contre le réservoir sous pression.

Figure 5, selon un autre exemple de réalisation, le raccord (150) comprend une aiguille annelée (551) pénétrant, à travers l'enveloppe externe (210) et l'empilement fibreux, jusqu'à l'intérieur de la cavité (290) du réservoir. Comme selon les exemples de réalisation précédents, le raccord (150) est constitué d'un matériau métallique, le cas échéant résistant à la fragilisation par l'hydrogène tel qu'un alliage de cuivre ou d'aluminium, et est introduit dans la préforme du réservoir avant l'imprégnation de l'enveloppe externe par le polymère constituant la matrice.

Selon cet exemple de réalisation, ledit raccord est maintenu en position par une bride métallique (550) laquelle est également maintenue par une ou plusieurs bandes de maintien (160).

Figure 6, selon une variante de réalisation, le réservoir objet de l'invention comprend une enveloppe interne (620), comprenant une pluralité d'espaceurs creux (691), s'étendant entre deux faces de ladite enveloppe interne et répartis sur toute la surface de ces deux faces.

Lesdits espaceurs creux (691) sont de forme quelconque mais discontinus de sorte à ne pas cloisonner de manière étanche le volume interne de ladite enveloppe interne (620). De même lesdits espaceurs ne sont pas nécessairement perpendiculaires aux parois entre lesquels ils s'étendent.

Selon cet exemple de réalisation, les espaceurs tubulaires (691) sont cylindriques et viennent de matière avec les parois de l'enveloppe interne et leurs alésages (692) traversent lesdites parois.

L'enveloppe interne (620) délimite une cavité interne (690) étanche apte à contenir un gaz. Ladite enveloppe interne est, selon des exemples de réalisation, constituée de polyéthylène haute densité ou de polyamide (PA6).

À titre d'exemple, elle est obtenue par des techniques d'injection plastique.

L'enveloppe externe (610) est constituée d'un matériau composite à matrice polymère et renforts fibreux continus, comprenant un empilement de plis fibreux selon plusieurs directions de renfort, pour un taux de fibres compris entre 40 % et 65 % de fibres de carbone, de verre d'aramide ou toute combinaison, sans que ces exemples ne soient limitatifs.

Des fibres (604) s'étendent dans l'enveloppe externe (610) et entre les faces de celle-ci, en traversant la cavité interne (690) du réservoir dans les alésages (692) des espaceurs creux (691). Ces fibres (604) sont imprégnées du polymère, thermodurcissable ou thermoplastique, constituant la matrice de l'enveloppe externe, lequel remplit les alésages (692) des espaceurs creux. Ainsi, les espaceurs creux (691) comprenant des fibres (604) constituent des renforts transversaux, mis en tension par la pression dans la cavité interne (690) et participant à la résistance du réservoir. Ils constituent aussi des raidisseurs participant à la rigidité et la résistance en flexion de la plaque composite formée par le réservoir, et délimitent des alvéoles ouvertes à l'intérieur de la cavité.

Les renforts transversaux (604) s'étendent à la fois entre deux faces non contiguës, dans les espaceurs creux, sensiblement perpendiculairement auxdites deux faces, mais aussi dans l'épaisseur desdites faces, sensiblement parallèlement à ces faces.

Les raccords sont intégrés au réservoir réalisé selon cette variante de manières similaires à celles exposées précédemment en regard des figures 3 à 5.

À titre d'exemple dimensionnel, quel que soit le mode de réalisation, avec un renfort de fibres de carbone, un réservoir selon l'invention apte à contenir 4,4 kg d'hydrogène à 700 bars, se présente sous la forme d'une plaque rectangulaire de 1 m × 0,8 m pour 10 cm d'épaisseur. L'enveloppe externe a une épaisseur de 3 à 5 mm et l'enveloppe interne ou le liner, une épaisseur comprise entre 1 mm et 3 mm. Ainsi, le volume externe d'un tel réservoir est de 0,08 m³, égal à son encombrement si cet encombrement est défini comme le volume prismatique capable de contenir le réservoir.

À titre de comparaison, un réservoir cylindrique classique aux extrémités hémisphériques, dont l'enveloppe est constituée d'un matériau composite à renfort fibreux continu de fibres de carbone, d'une épaisseur de 9 mm, et de même contenance, présente un diamètre de 32 cm pour un volume externe de 0,08 m³. Toutefois son encombrement est supérieur de 25 % à 40 % à celui du réservoir objet de l'invention.

Du fait de sa forme et de ses caractéristiques mécaniques, le réservoir objet de l'invention est facilement intégré dans une structure destinée au transport de fret ou de passagers, à la place d'éléments structurels, sans modifier l'habitabilité ou le volume utile de ladite structure.

En effet, le réservoir objet de l'invention étant, le cas échéant, conçu pour offrir, en plus de la contenance du gaz sous pression, les mêmes caractéristiques structurelles que les éléments structurels qu'il remplace, l'intégration du réservoir à ladite structure est réalisée avec un apport de masse réduit en comparaison des solutions de l'art antérieur.

Ainsi, selon un exemple d'utilisation, le réservoir objet de l'invention (701, 702) est par exemple intégré aux planchers dans la structure d'un aéronef (700), en zone passager ou en zone cargo.

Figure 8, selon un autre exemple d'utilisation, un ou plusieurs réservoirs (801, 802) selon l'invention sont intégrés au châssis (800) d'un véhicule électrique à pile à combustible.

Ces exemples ne sont pas limitatifs et le réservoir objet de l'invention est avantageusement intégré à un navire, à un véhicule ferroviaire ou un véhicule industriel.

## Revendications

1. Réservoir de forme générale prismatique, apte à contenir un gaz sous pression, et comprenant une enveloppe composite (210, 610) à renforts fibreux et matrice continus s'étendant sur toutes les faces du prisme et délimitant une cavité interne (290, 690) étanche comprenant une pluralité d'alvéoles ouvertes, comprenant des renforts fibreux (201, 202, 203, 204, 604) continus s'étendant dans l'enveloppe composite (210, 610) et liés à celle-ci et qui, de plus, s'étendent à travers la cavité interne entre deux faces du réservoir, **caractérisé en ce qu'**il comprend une doublure étanche (220, 620) entre l'enveloppe composite (210, 610) et la cavité interne (290, 690), et des espaceurs (291, 691) s'étendant entre deux faces de ladite cavité.

2. Réservoir selon la revendication 1, dans lequel les espaceurs (691) sont creux et les renforts transversaux (604) s'étendent à l'intérieur desdits espaceurs creux (691).

3. Réservoir selon la revendication 1, dans lequel les espaceurs (291) sont constitués d'un non-tissé tridimensionnel.

4. Réservoir selon la revendication 1, comprenant une bride (110) venant de matière avec l'enveloppe composite pour sa fixation.

5. Réservoir selon la revendication 1, comprenant un raccord (130, 140, 150) comprenant une partie (331, 441, 551) s'étendant à travers l'enveloppe composite (290, 690) jusque dans la cavité interne (290, 690)

6. Réservoir selon la revendication 5, dans lequel la partie (331) du raccord s'étendant jusque de la cavité interne (290, 690) est filetée.

7. Réservoir selon la revendication 5, dans lequel la partie du raccord s'étendant jusque dans la cavité interne (290, 690) est une aiguille conique (441).

8. Réservoir selon la revendication 5, dans lequel la partie du raccord (150) s'étendant jusque de la cavité interne (290, 690) est une aiguille annelée (551).

9. Réservoir selon la revendication 5, dans lequel le raccord est maintenu par des bandes de maintien (160) entourant le réservoir.

10. Utilisation du réservoir selon la revendication 1, pour contenir de l'hydrogène sous une pression comprise entre 200 bars et 1000 bars.

11. Utilisation selon la revendication 10, dans laquelle le réservoir (701, 702) est intégré à la structure plancher d'un aéronef (700).

12. Utilisation selon la revendication 10, dans lequel le réservoir (801, 802) est intégré à la structure plancher d'un châssis de véhicule automobile (800) électrique à pile à combustible.

## Patentansprüche

1. Behälter mit allgemein prismatischer Form, der geeignet ist, um ein Gas unter Druck zu enthalten, und umfassend eine Verbundhülle (210, 610) mit durchgehenden Faser- und Matrixverstärkungen, die sich über alle Seiten des Prismas erstrecken und einen dichten inneren Hohlraum (290, 690) umfassend eine Vielzahl von offenen Zellen begrenzen, umfassend durchgehende Faserverstärkungen (201, 202, 203, 204, 604), die sich in der Verbundhülle (210, 610) erstrecken und damit verbunden sind, und die sich außerdem zwischen zwei Seiten des Behälters durch den inneren Hohlraum erstrecken, **dadurch gekennzeichnet, dass** er eine dichte Auskleidung (220, 620) zwischen der Verbundhülle (210, 610) und dem inneren Hohlraum (290, 690) sowie Abstandhalter (291, 691), die sich zwischen zwei Seiten des Hohlraums erstrecken, umfasst.

2. Behälter nach Anspruch 1, wobei die Abstandhalter (691) hohl sind und die Querverstärkungen (604) sich innerhalb der hohlen Abstandhalter (691) erstrecken.

3. Behälter nach Anspruch 1, wobei die Abstandhalter (291) aus einem dreidimensionalen Vliesstoff bestehen.

4. Behälter nach Anspruch 1, umfassend einen Flansch (110), der zur Befestigung einstückig mit der Verbundhülle ist.

5. Behälter nach Anspruch 1, umfassend einen Anschluss (130, 140, 150), umfassend einen Abschnitt (331, 441, 551), der sich durch die Verbundhülle (290, 690) in den inneren Hohlraum (290, 690) erstreckt.

6. Behälter nach Anspruch 5, wobei der Abschnitt (331) des Anschlusses, der sich in den inneren Hohlraum (290, 690) erstreckt, mit einem Gewinde versehen ist.

7. Behälter nach Anspruch 5, wobei der Abschnitt des Anschlusses, der sich in den inneren Hohlraum (290, 690) erstreckt, eine konische Nadel (441) ist.

8. Behälter nach Anspruch 5, wobei der Abschnitt des Anschlusses (150), der sich in den inneren Hohlraum (290, 690) erstreckt, eine geriffelte Nadel (551) ist.

9. Behälter nach Anspruch 5, wobei der Anschluss durch Haltebänder (160) gehalten wird, die den Behälter umgeben.

10. Verwendung des Behälters nach Anspruch 1, um Wasserstoff unter einem Druck zwischen 200 bar und 1 000 bar zu enthalten.

11. Verwendung nach Anspruch 10, wobei der Behälter (701, 702) in die Bodenstruktur eines Luftfahrzeugs (700) integriert ist.

12. Verwendung nach Anspruch 10, wobei der Behälter (801, 802) in die Bodenstruktur eines Fahrgestells eines Elektrokraftfahrzeugs (800) mit Brennstoffzelle integriert ist.

## Claims

1. A tank of generally prismatic shape, suitable for containing a gas under pressure, and comprising a composite envelope (210, 610) with continuous fibrous and matrix reinforcements extending over all the faces of the prism and delimiting a sealed internal cavity (290, 690) comprising a plurality of open cells, comprising continuous fibrous reinforcements (201, 202, 203, 204, 604) extending into and bonded to the composite shell (210, 610) and further extending across the internal cavity between two sides of the tank, **characterised in that** it comprises a sealed liner (220, 620) between the composite shell (210, 610) and the internal cavity (290, 690), and spacers (291, 691) extending between two sides of said cavity.

2. Tank according to claim 1, wherein the spacers (691) are hollow and the transverse reinforcements (604) extend within said hollow spacers (691).

3. Tank of claim 1, wherein the spacers (291) are made of a three-dimensional non-woven fabric.

4. Tank as claimed in claim 1, comprising a flange (110) integral with the composite shell for attachment.

5. Tank of claim 1, comprising a connector (130, 140, 150) comprising a portion (331, 441, 551) extending through the composite shell (290, 690) into the internal cavity (290, 690).

6. Tank of claim 5, wherein the portion (331) of the fitting extending to the internal cavity (290, 690) is threaded.

7. Tank of claim 5, wherein the part of the fitting extending into the internal cavity (290, 690) is a tapered needle (441).

8. Tank of claim 5, wherein the portion of the fitting (150) extending into the internal cavity (290, 690) is a corrugated needle (551).

9. Tank according to claim 5, wherein the connection is held by holding bands (160) surrounding the tank.

10. Use of the tank according to claim 1, to contain hydrogen at a pressure of between 200 bars and 1,000 bars.

11. The use according to claim 10, wherein the tank (701, 702) is integrated into the floor structure of an aircraft (700).

12. The use according to claim 10, wherein the tank (801, 802) is integrated into the floor structure of a fuel cell electric motor vehicle chassis (800).
